# EUROPÄISCHE PATENTSCHRIFT

(11) **EP 3 750 147 B1**
(45) Veröffentlichungstag und Bekanntmachung des Hinweises auf die Patenterteilung: **07.06.2023**
(21) Anmeldenummer: 19706860.4
(22) Anmeldetag: 07.02.2019
(51) Int. Cl.: G09F 13/04, G09F 15/00

(54) **VERBINDER FÜR ZWEI RAHMENELEMENTE, RAHMEN UND WERBEMODUL MIT DEM RAHMEN**
CONNECTOR FOR TWO FRAME ELEMENTS, FRAME, AND ADVERTISING MODULE HAVING THE FRAME
RACCORD POUR DEUX ÉLÉMENTS DE CADRE, CADRE ET MODULE PUBLICITAIRE POURVU DE CADRE

(30) Priorität: 07.02.2018 AT 501162018
(43) Veröffentlichungstag der Anmeldung: 16.12.2020
(73) Patentinhaber: Best Systems GmbH, 1230 Wien (AT)
(72) Erfinder: SALIHBASIC, Asmir, 1190 Wien (AT)
(74) Vertreter: SONN Patentanwälte OG
(86) Internationale Anmeldenummer: PCT/AT2019/060044
(87) Internationale Veröffentlichungsnummer: WO 2019/153024

(56) Entgegenhaltungen:
- WO-A1-97/44770
- DE-A1- 4 403 389
- ES-A1- 2 137 095
- GB-A- 2 261 982
- US-A- 4 862 612

## Beschreibung

Die Erfindung betrifft einen Verbinder zur Verbindung eines ersten Rahmenelements mit einem zweiten Rahmenelement, insbesondere eines LED-Leuchtbox-Rahmens, mit einem ersten Schenkel zum Einschieben in eine entsprechende Aufnahmenut des ersten Rahmenelements und mit einem zweiten Schenkel zum Einschieben in eine entsprechende weitere Aufnahmenut des zweiten Rahmenelements.

Die Erfindung betrifft zudem einen Rahmen, insbesondere LED-Leuchtbox-Rahmen, aufweisend:
- ein erstes Rahmenelement mit einer Aufnahmenut,
- ein zweites Rahmenelement mit einer weiteren Aufnahmenut,
- einen Verbinder mit einem ersten Schenkel, welcher in die Aufnahmenut des ersten Rahmenelements eingeschoben ist, und mit einem zweiten Schenkel, welcher in die weitere Aufnahmenut des zweiten Rahmenelements eingeschoben ist.

Schließlich betrifft die Erfindung ein Werbemodul, insbesondere Leuchtkasten, mit einem Rahmen und mit einem Werbeträger, welcher in einem gespannten Zustand mit dem Rahmen verbunden ist.

Verbinder sind in verschiedenen Ausführungen aus DE 44 03 389 A1, US 4 862 612 A, ES 2 137 095 A1 und WO 97/44770 A1 bekannt.

Im Stand der Technik ist es weiters bekannt, LED-Leuchtkästen für Ausstellungen und Werbezwecke einzusetzen. Bei einer bekannten Ausführung wird ein flächiger Werbeträger, beispielsweise ein bedruckter Stoff, in einem gespannten Zustand an einem Rahmen befestigt. Der Rahmen soll dabei den Werbeträger derart gespannt halten, dass keine Falten oder Wölbungen auftreten, wenn der Werbeträger, etwa im Rahmen von Ausstellungen, präsentiert wird. Bekannt ist es dabei auch, den Rahmen mit Aufnahmeschienen auszubilden, in denen die Ränder des Werbeträgers eingespannt werden. Je nach Anwendung können die LED-Leuchtkästen freistehend, als leuchtende Wandbilder oder von der Decke abgehängt angeordnet werden.

Bisher wurden die einzelnen Rahmenelemente des LED-Leuchtkastens miteinander verschraubt. Nachteilig ist dabei, dass die Zusammenstellung des Rahmens durch Verbinden der Rahmenelemente zeitaufwändig ist.

Aufgabe der Erfindung ist es daher, zumindest einzelne Nachteile des Standes der Technik zu lindern bzw. zu beheben. Die Erfindung setzt sich insbesondere zum Ziel, einen Verbinder der eingangs genannten Art vorzusehen, der eine rasche und unkomplizierte Verbindung von Rahmenelementen ermöglicht. Zudem setzt sich die Erfindung zum Ziel, einen Rahmen der eingangs genannten Art vorzusehen, der auf rasche und einfache Weise durch Verbinden der Rahmenelemente mit dem Verbinder montiert werden kann.

Diese Aufgabe wird durch einen Verbinder mit den Merkmalen von Anspruch 1, einen Rahmen mit den Merkmalen von Anspruch 9 und ein Werbemodul mit den Merkmalen von Anspruch 12 gelöst. Bevorzugte Ausführungsformen sind in den abhängigen Ansprüchen angegeben.

Demnach weist bei dem erfindungsgemäßen Verbinder zumindest der erste Schenkel zumindest ein federnd gelagertes Druckstück zum Verklemmen des ersten Schenkels innerhalb der Aufnahmenut des ersten Rahmenelements auf. Ein derartiger Verbinder ermöglicht somit eine rasche und bevorzugter Weise werkzeuglose Verbindung zweier Rahmenelemente, nämlich eines ersten und eines zweiten Rahmenelements eines Rahmens, der aus zumindest zwei Rahmenelementen gebildet ist. Hierfür wird das erste Rahmenelement auf den ersten Schenkel des Verbinders aufgeschoben, um den ersten Schenkel in einer entsprechenden Aufnahmenut des ersten Rahmenelements aufzunehmen. Zudem wird das zweite Rahmenelement auf den zweiten Schenkel des Verbinders aufgeschoben, um den zweiten Schenkel in einer entsprechenden weiteren Aufnahmenut des zweiten Rahmenelements aufzunehmen. Die weitere Aufnahmenut des zweiten Rahmenelements weist bevorzugt die gleiche Querschnittsform bzw. die gleichen Querschnittsabmessungen wie die Aufnahmenut des ersten Rahmenelements auf. Da der erste Schenkel zumindest ein federnd gelagertes Druckstück zum Verklemmen des ersten Schenkels innerhalb der Aufnahmenut des ersten Rahmenelements aufweist, wird der Verbinder kraft- bzw. reibschlüssig mit dem ersten Rahmenelement in Eingriff gehalten. Die kraftschlüssige Verbindung wird durch den Druck des federnd gelagerten Druckstücks auf eine Begrenzungswand der Aufnahmenut des ersten Rahmenelements erzielt. Hierfür ist das federnd gelagerte Druckstück in einem Zustand, in welchem der Verbinder mit dem ersten Rahmenelement verbunden ist, einer Begrenzungswand der Aufnahmenut des ersten Rahmenelements zugewandt. Der Verbinder, insbesondere der erste und der zweite Schenkel, und die Aufnahmenuten können ausgebildet sein, auch dann, wenn das Druckstück nicht vorgesehen wäre, kraftschlüssig miteinander verbunden zu sein. Hierbei ist beim Einschieben des ersten Schenkels in die entsprechende Aufnahmenut des ersten Rahmenelements ein Widerstand durch Reibung zu überwinden. Das Druckstück bewirkt eine Erhöhung der Reibkraft zwischen dem ersten Schenkel und der Aufnahmenut des ersten Rahmenelements und erhöht somit die Zuverlässigkeit der Verbindung.

Es sei darauf hingewiesen, dass der Begriff "erster Schenkel" einen der beiden Schenkel des Verbinders bezeichnet. Wenn beide Schenkel zumindest ein federnd gelagertes Druckstück aufweisen, kann jeder der beiden Schenkel der erste Schenkel sein. Wenn hingegen nur ein Schenkel zumindest ein federnd gelagertes Druckstück aufweist, ist dieser Schenkel der erste Schenkel. Vorzugsweise sind der erste und der zweite Schenkel des Verbinders im Wesentlichen identisch geformt. Beispielsweise können der erste und der zweite Schenkel des Verbinders im Wesentlichen identisch ausgebildet sein.

Gemäß einer bevorzugten Ausführungsform der Erfindung kann vorgesehen sein, dass das Druckstück, insbesondere eine Kugel, verschiebbar geführt in einer Hülse aufgenommen ist und über ein Federelement in der Hülse, insbesondere eine Schraubenfeder, in Richtung einer Position, in welcher das Druckstück aus einem eine Austrittsöffnung aufweisenden Ende der Hülse herausragt, vorgespannt ist. Das Druckstück ist somit gemeinsam mit dem Federelement in der Hülse aufgenommen. Bevorzugt ist ein Ende des Federelements an der Hülse abgestützt während das andere Ende des Federelements am Druckstück anliegt und dieses gegen das mit einer Austrittsöffnung versehene Ende der Hülse drückt. In einem Zustand, in welchem der Verbinder vom damit zu verbindenden Rahmenelement getrennt ist, ragt das Druckstück ein Stück weit aus dem mit der Austrittsöffnung versehenen Ende der Hülse, d.h aus der Austrittsöffnung, heraus. In einem anderen Zustand, in welchem der Verbinder in das Rahmenelement eingeschoben ist, drückt das Rahmenelement das Druckstück gegen die Kraft des Federelements in die Hülse hinein, wodurch ein Kraftschluss zwischen dem Verbinder und dem Rahmenelement gebildet wird. Die Federkraft auf das federnd gelagerte Druckstück wirkt im Wesentlichen in Richtung senkrecht zur Hauptebene des ersten Schenkels, der das Druckstück aufweist. Wenn die Hülse zylindrisch ausgebildet ist, kann sie in eine einfach herzustellende Bohrung im Schenkel des Verbinders eingesetzt werden. Bevorzugt weist die Hülse zumindest an jenem Ende, welches dem Ende mit der Austrittsöffnung gegenüberliegt einen Einführkonus, d.h. einen abgeschrägten Abschnitt auf, um das Einsetzen der Hülse in eine hierfür vorgesehenen Ausnehmung im Schenkel zu erleichtern.

Gemäß einer bevorzugten Ausführungsform ist eine Stirnseite am die Austrittsöffnung aufweisenden Ende der Hülse bündig mit den angrenzenden Abschnitten des die Hülse aufweisenden ersten Schenkels angeordnet. Auf diese Weise steht das die Austrittsöffnung aufweisende Ende der Hülse nicht über die Hauptebene des Schenkels vor, wodurch die Hülse das Einschieben des Schenkels in die Aufnahmenut des Rahmenelements auch nicht vorübergehend blockiert.

Um die Verbindung zwischen dem ersten Schenkel und dem ersten Rahmenelement noch zuverlässiger zu gestalten, wird bevorzugt, dass der erste Schenkel zwei in Längsrichtung des ersten Schenkels voneinander beabstandete Druckstücke aufweist. Somit drücken beide Druckstücke am ersten Schenkel im mit dem ersten Rahmenelement verbundenen Zustand gegen das erste Rahmenelement. Die Längsrichtung des ersten Schenkels ist jene Richtung, in welcher der erste Schenkel in die Aufnahmenut des ersten Rahmenelements eingeschoben wird.

Um auch eine besonders vorteilhafte Verbindung mit dem zweiten Rahmenelement herstellen zu können, kann vorgesehen sein, dass der zweite Schenkel zumindest ein weiteres Druckstück zum Verklemmen des zweiten Schenkels innerhalb der weiteren Aufnahmenut des zweiten Rahmenelements aufweist, wobei der zweite Schenkel bevorzugt zwei in Längsrichtung des zweiten Schenkels voneinander beabstandete Druckstücke aufweist. Das weitere Druckstück ist bevorzugt identisch zum federnd gelagerten Druckstück des ersten Schenkels ausgebildet. Das weitere Druckstück im zweiten Schenkel bewirkt im Bezug auf das zweite Rahmenelement die gleichen Vorteile wie das Druckstück im ersten Schenkel im Bezug auf das erste Rahmenelement. Wenn der zweite Schenkel zwei in Längsrichtung des zweiten Schenkels voneinander beabstandete Druckstücke aufweist, ist die Verbindung zwischen dem zweiten Schenkel und dem zweiten Rahmenelement noch zuverlässiger. Die Längsrichtung des zweiten Schenkels ist jene Richtung, in welcher der zweite Schenkel in die weitere Aufnahmenut des zweiten Rahmenelements eingeschoben wird.

Im Fall eines rechteckigen oder quadratischen Rahmens ist es besonders vorteilhaft, wenn der erste Schenkel und der zweite Schenkel in einem Winkel von vorzugsweise im Wesentlichen 90 Grad zueinander angeordnet sind. Hierdurch kann der Verbinder in einer Ecke des Rahmens angeordnet sein. Der Verbinder ist somit vorzugsweise ein Verbindungswinkel.

Für eine definierte Positionierung des ersten Rahmenelements in Bezug auf den damit verbundenen Verbinder ist vorgesehen, dass ein Verbindungselement, beispielsweise ein Eckverbindungselement, mit einer im Wesentlichen senkrecht zum ersten Schenkel verlaufenden ersten Anlagefläche zur Stoßverbindung mit einer geraden Stirnseite des ersten Rahmenelements vorgesehen ist. Die erste bzw. die eine Anlagefläche des (Eck)verbindungselements begrenzt den Einschubweg des Verbinders in die Aufnahmenut des Rahmenelements und definiert somit eine Verbindungsposition, in welcher der erste Schenkel vollständig in die Aufnahmenut des ersten Rahmenelements eingeschoben ist. In dieser Verbindungsposition liegt die gerade Stirnseite (ein Ende) des ersten Rahmenelements an der ersten Anlagefläche des (Eck)verbindungselements des Verbinders an. Diese Ausführung bringt den Vorteil mit sich, dass das Rahmenelement weniger scharfkantig als bei einem auf Gehrung zusammengesetzten Rahmenelement sein kann.

Der Verbinder kann besonders zuverlässig mit dem ersten Rahmenelement verbunden werden, wenn eine Mehrzahl von ersten Schenkeln an der ersten Anlagefläche des Verbindungselements, beispielsweise Eckverbindungselements, angeordnet sind. Dabei greift jeder der Mehrzahl von ersten Schenkeln in eine entsprechende Aufnahmenut des ersten Rahmenelements ein, wenn der Verbinder mit dem ersten Rahmenelement verbunden ist. Auf diese Weise wird einerseits der Kraftschluss und andererseits die Winkelstabilität zwischen dem Verbinder und dem ersten Rahmenelement erhöht. Zweckmäßiger Weise weisen die mehreren ersten Schenkel, welche voneinander beabstandet sind, in eine gleiche Richtung. Beispielsweise kann der Verbinder zwei erste Schenkel aufweisen.

Um auch das zweite Rahmenelement in Bezug auf den damit verbundenen Verbinder definiert positionieren zu können, wird bevorzugt, dass das Verbindungselement, beispielsweise Eckverbindungselement, eine im Wesentlichen senkrecht zum zweiten Schenkel verlaufende zweite Anlagefläche zur Stoßverbindung mit einer geraden Stirnseite des zweiten Rahmenelements aufweist. Die zweite bzw. die andere Anlagefläche des (Eck)verbindungselements begrenzt den Einschubweg des Verbinders in die weitere Aufnahmenut des zweiten Rahmenelements und definiert somit eine Verbindungsposition, in welcher der zweite Schenkel vollständig in die weitere Aufnahmenut des zweiten Rahmenelements eingeschoben ist. In dieser Verbindungsposition liegt die gerade Stirnseite (ein Ende) des zweiten Rahmenelements an der zweiten Anlagefläche des (Eck)verbindungselements des Verbinders an.

Der Verbinder kann besonders zuverlässig mit dem zweiten Rahmenelement verbunden werden, wenn eine Mehrzahl von zweiten Schenkeln an der zweiten Anlagefläche des Verbindungselements, beispielsweise Eckverbindungselements, angeordnet sind. Dabei greift jeder der Mehrzahl von zweiten Schenkeln in eine entsprechende weitere Aufnahmenut des zweiten Rahmenelements ein, wenn der Verbinder mit dem zweiten Rahmenelement verbunden ist. Auf diese Weise wird einerseits der Kraftschluss und andererseits die Winkelstabilität zwischen dem Verbinder und dem zweiten Rahmenelement erhöht. Zweckmäßiger Weise weisen die mehreren zweiten Schenkel, welche voneinander beabstandet sind, in eine gleiche Richtung. Beispielsweise kann der Verbinder zwei zweite Schenkel aufweisen.

Um die Winkelstabilität zwischen dem Verbinder und dem ersten damit verbundenen Rahmenelement zu erhöhen, ist an der ersten Anlagefläche des Verbindungselements, beispielsweise Eckverbindungselements, ein Versteifungselement zum Einschieben in eine entsprechende Nut des ersten Rahmenelements vorgesehen. Das Versteifungselement kann ein von der ersten Anlagefläche abstehender Stift oder Steg sein, der in einem Zustand, in welchem der Verbinder mit dem ersten Rahmenelement verbunden ist, in die Nut bzw. in eine Vertiefung des ersten Rahmenelements eingreift. Dabei ist die Nut bzw. Vertiefung des ersten Rahmenelements zweckmäßiger Weise in einer Stirnseite (im dem Verbinder zugewandten Ende) des ersten Rahmenelements ausgebildet.

Um noch allgemeiner die Winkelstabilität zwischen dem Verbinder und zumindest einem des ersten und zweiten damit verbundenen Rahmenelements zu erhöhen, ist vorgesehen dass an der ersten Anlagefläche des Verbindungselements, beispielsweise Eckverbindungselements, und/oder an der zweiten Anlagefläche des Verbindungselements, beispielsweise Eckverbindungselements, ein Versteifungselement zum Einschieben in eine entsprechende Nut bzw. Vertiefung des ersten Rahmenelements und/oder des zweiten Rahmenelements vorgesehen ist.

Der zuvor erläuterte Verbinder wird bevorzugt bei einem Rahmen, insbesondere ein LED-Leuchtbox-Rahmen, eingesetzt. Der Rahmen wird aus Rahmenelementen gebildet, wobei zumindest zwei Rahmenelemente, nämlich ein erstes Rahmenelement und ein zweites Rahmenelement, mittels des Verbinders vorzugsweise lösbar, insbesondere steckbar, miteinander verbunden sind. Hierfür weist der Rahmen zumindest das erste Rahmenelement mit einer Aufnahmenut, das zweite Rahmenelement mit einer weiteren Aufnahmenut und den Verbinder auf. Bevorzugt sind die Aufnahmenut des erstes Rahmenelements und die weitere Aufnahmenut des zweiten Rahmenelements seitlich, d.h. in ihrer Längsrichtung, durch Stege begrenzt. Wenn mehrere nebeneinander angeordnete Aufnahmenuten im ersten oder zweiten Rahmenelement vorgesehen sind, sind die nebeneinander angeordneten Aufnahmenuten des ersten oder zweiten Rahmenelements bevorzugt durch die Stege voneinander getrennt. Die Aufnahmenut(en) des ersten Rahmenelements und die weitere(n) Aufnahmenut(en) des zweiten Rahmenelements sind an ihrer Oberseite bevorzugt durch von den Stegen seitlich abstehende, Hinterschneidungen bildende Vorsprünge begrenzt. Die einander zugewandten Vorsprünge einer Aufnahmenut sind unter Belassung von Schlitzen voneinander beabstandet. Die Vorsprünge sind streifenförmig angeordnet und stehen bevorzugt im rechten Winkel von den Stegen ab. Der Verbinder weist einen ersten Schenkel auf, welcher zur Verbindung mit dem ersten Rahmenelement in die Aufnahmenut des ersten Rahmenelements eingeschoben ist. Der Verbinder weist auch einen zweiten Schenkel auf, welcher zur Verbindung mit dem zweiten Rahmenelement in die weitere Aufnahmenut des zweiten Rahmenelements eingeschoben ist. Der erste bzw. zweite Schenkel steht dabei bevorzugt mit den Stegen, den Vorsprüngen und einer den Vorsprüngen gegenüberliegenden Rückwand der Aufnahmenut(en) in Eingriff. Für eine zuverlässige, kraftschlüssige Verbindung des ersten mit dem zweiten Rahmenelement weist zumindest der erste Schenkel des Verbinders zumindest ein federnd gelagertes Druckstück zum Verklemmen des ersten Schenkels innerhalb der Aufnahmenut des ersten Rahmenelements auf. In Zusammenhang mit den Merkmalen des Verbinders wird auch auf die bisherige Beschreibung des Verbinders verwiesen, d.h. es ist insbesondere vorgesehen, dass der Verbinder des Rahmens die Merkmale des zuvor beschriebenen Verbinders aufweisen kann. Die Erfindung betrifft somit auch eine Kombination des Verbinders gemäß der bisherigen Beschreibung mit einem ersten Rahmenelement mit einer Aufnahmenut und mit einem zweiten Rahmenelement mit einer weiteren Aufnahmenut.

Im Zusammenhang mit dem Rahmen kann vorgesehen sein, dass das Druckstück, insbesondere eine Kugel, verschiebbar geführt in einer Hülse aufgenommen ist und über ein Federelement in der Hülse, insbesondere eine Schraubenfeder, in Richtung einer Position, in welcher das Druckstück aus einem eine Austrittsöffnung aufweisenden Ende der Hülse herausragt, vorgespannt ist. Hinsichtlich der Vorteile dieser Ausführungsform wird auf die bisherige Beschreibung verwiesen.

Im Zusammenhang mit dem Rahmen kann weiters vorgesehen sein, dass eine Stirnseite am die Austrittsöffnung aufweisenden Ende der Hülse bündig mit den angrenzenden Abschnitten des ersten Schenkels angeordnet ist. Auch hinsichtlich der Vorteile dieser Ausführungsform wird auf die bisherige Beschreibung verwiesen.

Die Erfindung wird im Folgenden anhand von bevorzugten, nicht einschränkenden Ausführungsformen unter Bezugnahme auf die Zeichnung noch weiter erläutert.
Fig. 1 zeigt einen Rahmen gemäß der Erfindung, der aus Verbindern und Rahmenelementen zusammengesetzt ist.
Fig. 2 zeigt ein Werbemodul bzw. Werbeelement mit dem Rahmen aus Fig. 1 samt Stoffbezug, welcher als Informations- bzw. Werbefläche dient.
Fig. 3 zeigt zwei Rahmenelemente, die über zwei Verbinder gemäß der Erfindung miteinander zu verbinden sind.
Fig. 4 zeigt einen anders ausgebildeten Verbinder gemäß der Erfindung für die Verbindung von zwei Rahmenelementen.
Fig. 5 zeigt den Verbinder aus Fig. 4 in einer teilweise geschnittenen Ansicht.
Fig. 6 zeigt den Verbinder aus Fig. 4 mit einem Schnitt durch den ersten Schenkel.
Fig. 7 zeigt einen Abschnitt eines Schenkels des Verbinders aus Fig. 3 oder Fig. 4, mit einem Druckstück in einer Ruhestellung, in einer Schnittansicht.
Fig. 8 zeigt den Abschnitt des Schenkels aus Fig. 7, mit dem Druckstück in einer Verbindungsstellung, in einer Schnittansicht.

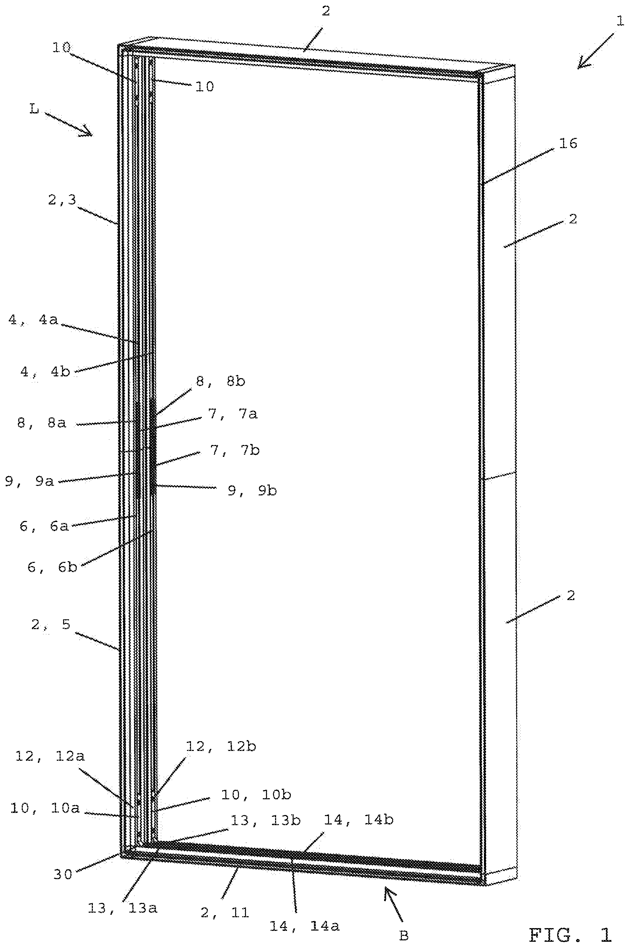

Fig. 1 zeigt einen rechteckigen Rahmen 1, welcher insbesondere ein LED-Leuchtbox-Rahmen sein kann, an welchem nicht dargestellte Leuchtmittel, bspw. Leuchtdioden (LEDs), angebracht sein können. Der Rahmen 1 weist mehrere Rahmenelemente 2, insbesondere ein erstes Rahmenelement 3 mit einer Aufnahmenut 4 und ein zweites Rahmenelement 5 mit einer weiteren Aufnahmenut 6 auf. Im in Fig. 1 dargestellten Beispiel verlaufen die beiden Rahmenelemente 3, 5 in eine gleiche Richtung, d.h. der Rahmen 1 ist an einer Längsseite L mittels der Rahmenelemente 3, 5 zusammengesetzt. Im in Fig. 1 dargestellten Beispiel weist das erste Rahmenelement 3 zwei Aufnahmenuten 4, 4a, 4b und das zweite Rahmenelement 5 zwei weiteren Aufnahmenuten 6, 6a, 6b auf. Der Rahmen 1 weist zudem vier Verbinder 7 mit einem ersten Schenkel 8 und mit einem zweiten Schenkel 9 auf, wobei in Fig. 1 nur zwei Verbinder 7 sichtbar sind. Dabei ist der erste Schenkel 8 in die Aufnahmenut 4 des ersten Rahmenelements 3 eingeschoben und der zweite Schenkel 9 ist in die weitere Aufnahmenut 6 des zweiten Rahmenelements 5 eingeschoben. Somit verbindet der Verbinder 7 das erste Rahmenelement 3 mit dem zweiten Rahmenelement 5. Der Verbinder 7 ist insbesondere ein Längsverbinder. Im in Fig. 1 dargestellten Beispiel sind insbesondere zwei als Längsverbinder ausgebildete Verbinder 7a, 7b dargestellt, d.h. der erste Schenkel 8 und der zweite Schenkel 9 sind in einem Winkel von im Wesentlichen null Grad zueinander angeordnet. Dabei ist der erste Schenkel 8a des einen Verbinders 7a in die Aufnahmenut 4a des ersten Rahmenelements 3 eingeschoben und der zweite Schenkel 9a des einen Verbinders 7a ist in die weitere Aufnahmenut 6a des zweiten Rahmenelements 5 eingeschoben. Zudem ist der erste Schenkel 8b des anderen Verbinders 7b in die Aufnahmenut 4b des ersten Rahmenelements 3 eingeschoben und der zweite Schenkel 9b des anderen Verbinders 7b ist in die weitere Aufnahmenut 6b des zweiten Rahmenelements 5 eingeschoben.

Fig. 1 zeigt zudem vier als Eckverbinder ausgebildete Verbinder 10, 10a, 10b, wobei zwei als Eckverbinder ausgebildete Verbinder 10, 10a, 10b das zweite Rahmenelement 5 an der Längsseite L des Rahmens 1 mit einem anderen Rahmenelement 11 an einer Breitseite B des Rahmens 1 verbinden. Der als Eckverbinder ausgebildete Verbinder 10 weist einen ersten Schenkel 12 und einen zweiten Schenkel 13 auf. Dabei greift der erste Schenkel 12, 12a des einen Verbinders 10, 10a in die Aufnahmenut 6, 6a des zweiten Rahmenelements 5 und der zweite Schenkel 13, 13a des einen Verbinders 10, 10a in eine Aufnahmenut 14, 14a des anderen Rahmenelements 11 ein. Zudem greift der erste Schenkel 12, 12b des anderen Verbinders 10, 10b in die Aufnahmenut 6, 6b des zweiten Rahmenelements 5 und der zweite Schenkel 13, 13b des anderen Verbinders 10, 10b in eine Aufnahmenut 14, 14b des anderen Rahmenelements 11 ein.

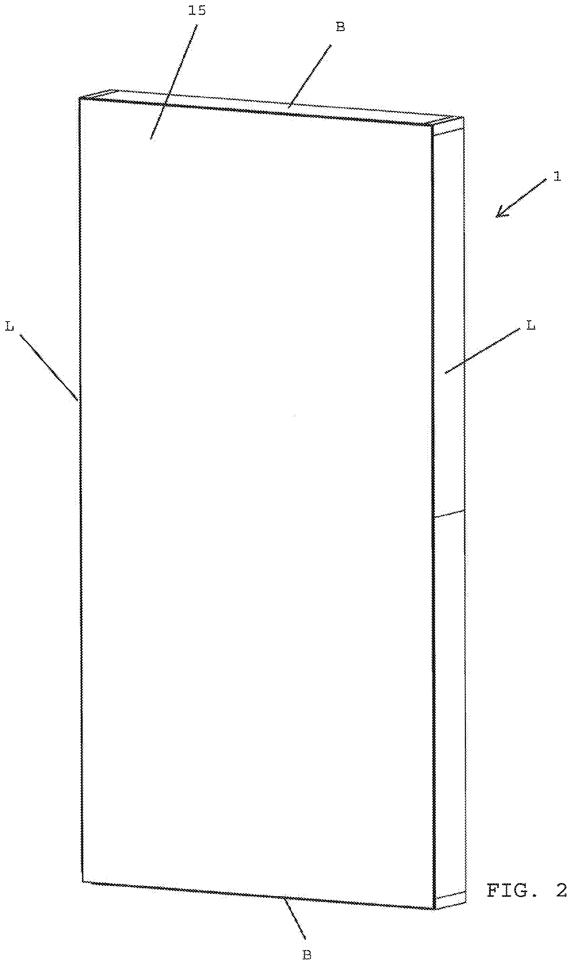

Fig. 2 zeigt ein Werbemodul mit dem Rahmen 1 samt Stoffbezug 15, welcher als Informationsfläche dient. Der Stoffbezug 15 ist zwischen die Längsseiten L und Breitseiten B des Rahmens 1 gespannt. Hierfür kann der Stoffbezug 15 mittels Gummilippen in Rillen 16 (Fig. 1) in den Rahmenelementen 2 eingeklemmt werden. Zur Darstellung von Information am Stoffbezug 15 kann dieser mit im Rahmen 1 angeordneten Leuchtmitteln beleuchtet werden.

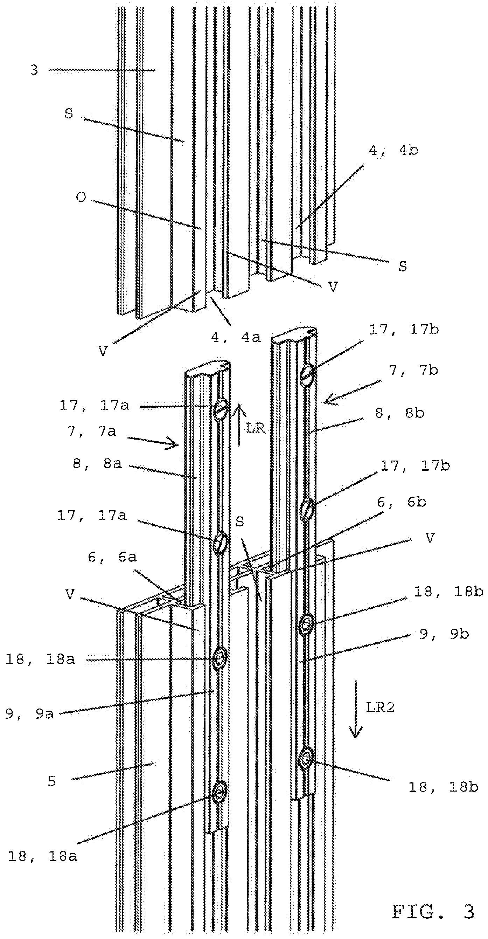

Fig. 3 zeigt in vergrößerter Darstellung den als Längsverbinder ausgebildeten Verbinder 7, 7a, 7b in einem in das zweite Rahmenelement 5 eingeschobenen Zustand, noch vor dem Einschieben in das erste Rahmenelement 3. Deutlich erkennbar sind die Aufnahmenuten 4, 4a, 4b des ersten Rahmenelements 3 und die weiteren Aufnahmenuten 6, 6a, 6b des zweiten Rahmenelements 5. Die Aufnahmenuten 4, 6 sind im in Fig. 3 darstellten Beispiel seitlich durch Stege S begrenzt. An ihrer Oberseite O sind die Aufnahmenuten 4, 6 dabei durch von den Stegen S seitlich abstehende, Hinterschneidungen bildende Vorsprünge V begrenzt. Die Vorsprünge V sind durch Schlitze voneinander beabstandet, streifenförmig ausgebildet und stehen im rechten Winkel von den Stegen S ab. Die Schenkel 8, 9 weisen bevorzugt ein zum Profil der Aufnahmenuten 4, 6 des ersten und zweiten Rahmenelements 3, 5 korrespondierendes Profil auf.

Fig. 3 zeigt auch, dass zumindest der erste Schenkel 8 des Verbinders 7 zumindest ein federnd gelagertes Druckstück 17 zum Verklemmen des ersten Schenkels 8 innerhalb der Aufnahmenut 4 des ersten Rahmenelements 3 aufweist. Im in Fig. 3 dargestellten Beispiel ist insbesondere erkennbar, dass der erste Schenkel 8 zwei in Längsrichtung LR des ersten Schenkels 8 voneinander beabstandete Druckstücke 17, 17a aufweist. Demgegenüber weist der zweite Schenkel 9 des Verbinders 7 zumindest ein schraubenförmig ausgebildetes Druckstück 18 zum Verklemmen bzw. Verschrauben des zweiten Schenkels 9 innerhalb der Aufnahmenut 6 des zweiten Rahmenelements 5 auf. Alternativ kann auch der zweite Schenkel 9 zumindest ein weiteres Druckstück 17 zum Verklemmen des zweiten Schenkels 9 innerhalb der weiteren Aufnahmenut 6 des zweiten Rahmenelements 5 aufweisen, wobei der zweite Schenkel 9 bevorzugt zwei in Längsrichtung LR2 des zweiten Schenkels 9 voneinander beabstandete Druckstücke 17 aufweist.

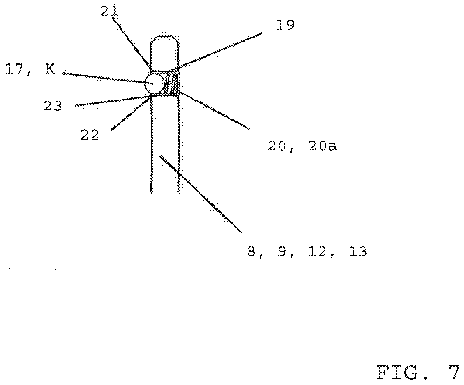

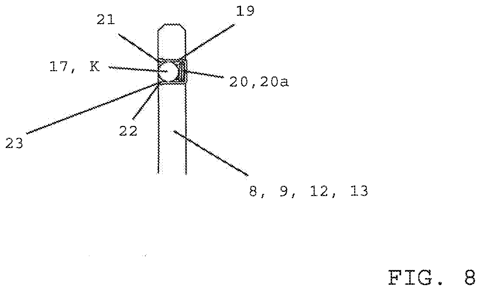

Die Fig. 7 und 8 zeigen, dass das Druckstück 17, insbesondere eine Kugel K, verschiebbar geführt in einer Hülse 19 aufgenommen ist und über ein Federelement 20, insbesondere eine Schraubenfeder 20a, in der Hülse 19 in Richtung einer Position, in welcher das Druckstück 17 aus einem eine Austrittsöffnung 21 aufweisenden Ende 22 der Hülse 19 herausragt, vorgespannt ist. Dabei ist das Druckstück 17 in Fig. 7 in einer Ruhestellung gezeigt, in welcher das Druckstück 17 auf Grund der Kraft des Federelements 20 ein Stück weit aus der Austrittsöffnung 21 herausragt. Demgegenüber ist das Druckstück 17 in Fig. 8 in einer Verbindungsstellung gezeigt, in welcher das Druckstück 17 durch das nicht dargestellte Rahmenelement 2, in dessen Aufnahmenut 4, 6, 14 das Druckstück 17 aufgenommen ist, in die Hülse 19 gegen die Kraft des Federelements 20 hineingedrückt wird. Weiters ist erkennbar, dass eine Stirnseite 23 am die Austrittsöffnung 21 aufweisenden Ende 22 der Hülse 19 bündig mit den angrenzenden Abschnitten des ersten Schenkels 8 oder allgemein einem der Schenkel 8, 9, 12, 13 angeordnet ist. Demnach steht die Hülse 19 im Bereich der Austrittsöffnung 21 nicht aus dem Schenkel 8, 9, 12, 13 hervor.

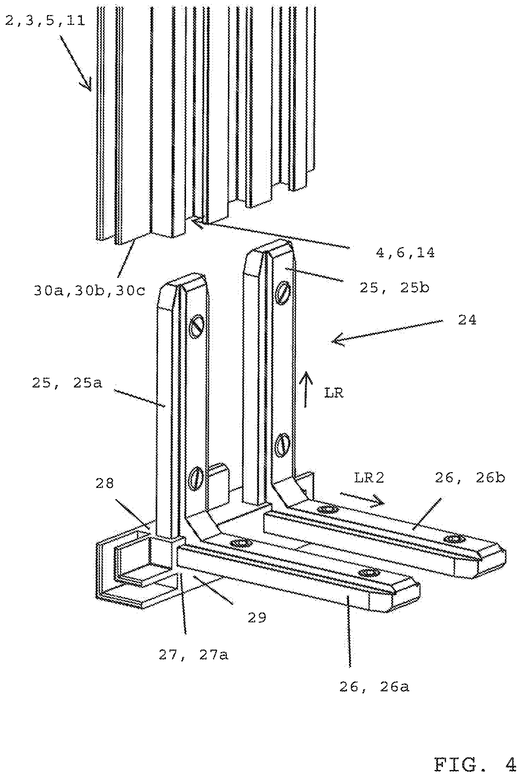

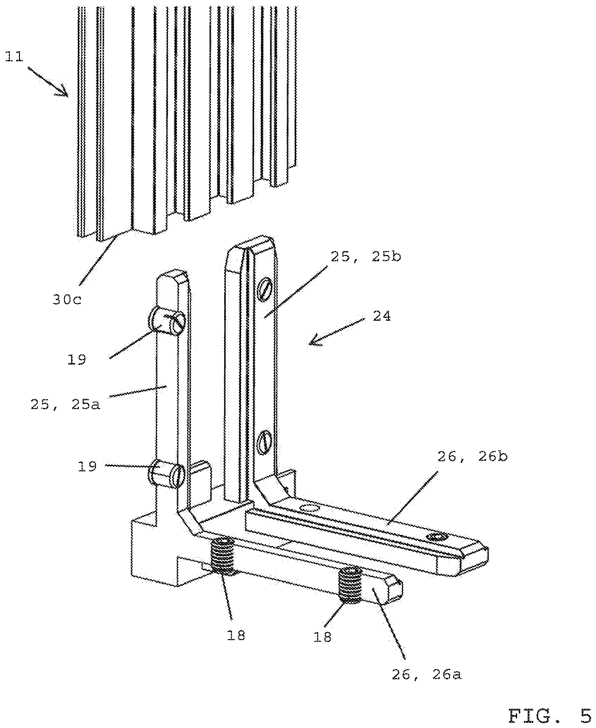

Die Fig. 4 bis 6 zeigen einen Verbinder 24, bei welchem der erste Schenkel 25 und der zweite Schenkel 26 in einem Winkel α von vorzugsweise im Wesentlichen 90 Grad zueinander angeordnet sind, d.h. der Verbinder 24 ist als Eckverbinder bzw. als Verbindungswinkel ausgebildet. Deutlich erkennbar ist ein Verbindungselement 27, insbesondere ein Eckverbindungselement 27a, mit einer im Wesentlichen senkrecht zum ersten Schenkel 25 verlaufenden ersten Anlagefläche 28 zur Stoßverbindung mit einer geraden Stirnseite 30b des zweiten Rahmenelements 5. Selbstverständlich könnte der Verbinder 24 auch das erste Rahmenelement 3 mit dem zweiten Rahmenelement 5 verbinden, wenn diese in einem Winkel α von im Wesentlichen 90 Grad zueinander angeordnet sein sollen. Zudem ist erkennbar, dass das Eckverbindungselement 27a eine im Wesentlichen senkrecht zum zweiten Schenkel 26 verlaufende zweite Anlagefläche 29 zur Stoßverbindung mit einer geraden Stirnseite 30c eines weiteren Rahmenelements 11 aufweist. Das weitere Rahmenelement 11 mit der Stirnseite 30c ist beispielhaft in Fig. 5 dargestellt. In den in den Fig. 4 bis 6 dargestellten Beispielen sind eine Mehrzahl von ersten Schenkeln 25, insbesondere zwei erste Schenkel 25a, 25b, an der ersten Anlagefläche 28 des Eckverbindungselements 27a angeordnet. Zudem sind eine Mehrzahl von zweiten Schenkeln 26, insbesondere zwei zweite Schenkel 26a, 26b, an der zweiten Anlagefläche 29 des Eckverbindungselements 27a angeordnet. Der Verbinder 24 mit zwei ersten Schenkeln 25a, 25b und zwei zweiten Schenkeln 26a, 26b kann somit aus zwei Verbindern 10 mit jeweils einem ersten Schenkel 12 und einem zweiten Schenkel 13 erhalten werden, welche zwei Verbinder 10 über das Eckverbindungselement 27a miteinander verbunden sind. Für die Verbindung mit dem ersten Rahmenelement 3, dem zweiten Rahmenelement 5 und/oder dem anderen Rahmenelement 11 wird der Verbinder 24 mit seinen Schenkeln 25, 26 in die Aufnahmenuten 4, 6, 14 des ersten Rahmenelements 3, des zweiten Rahmenelements 5 und/oder der anderen Rahmenelements 11 eingeschoben. Das Verbindungselement 27 kann in einem nicht dargestellten Beispiel auch am als Längsverbinder ausgebildeten Verbinder 7 vorgesehen sein, um den Einschub der Schenkel 8, 9 des Verbinders 7 in die Aufnahmenuten 4, 6 des ersten und zweiten Rahmenelements 3, 5 zu begrenzen.

In den Fig. 4 bis 6 ist jeweils ein Rahmenelement 2, insbesondere ein erstes Rahmenelement 3 mit einer Stirnseite 30a, ein zweites Rahmenelement 5 mit einer Stirnseite 30b bzw. ein anderes Rahmenelement 11 mit einer Stirnseite 30c gezeigt. Selbstverständlich kann der Verbinder 7, 10, 24 in jeder der beschriebenen Ausführungsformen mit einem der Rahmenelemente 2, 3, 5, 11 verbunden werden bzw. verbunden sein.

Fig. 5 zeigt deutlich, dass die Verbinder 24, insbesondere die Schenkel 25, 25a, 25b eine zylinderförmige Hülse 19 aufweisen, in welcher das Druckstück 17 aufgenommen ist. Der Verbinder 24 kann auch zumindest ein schraubenförmig ausgebildetes Druckstück 18 aufweisen. In einem nicht dargestellten Beispiel kann der Verbinder 24 auch in den Schenkeln 26, 26a, 26b zylinderförmige Hülsen 19 mit Druckstücken 17 aufweisen.

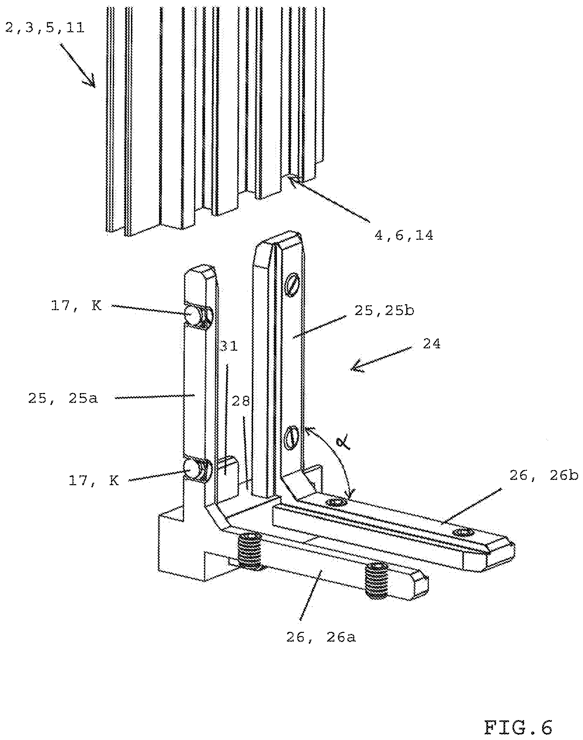

Fig. 6 zeigt den Verbinder 24 in einer Schnittansicht durch das Druckstück 17, welches als Kugel K ausgebildet ist. Fig. 6 zeigt auch, dass an der ersten Anlagefläche 28 des Verbindungselements bzw. Eckverbindungselements 27a, ein Versteifungselement 31 zum Einschieben in eine entsprechende, nicht dargestellte Nut des ersten Rahmenelements 3 vorgesehen ist.

Der Verbinder 7, 10, 24, insbesondere der erste Schenkel 8, 12, 25 und der zweite Schenkel 9, 13, 26, gegebenenfalls auch das Versteifungselement 31, sind bevorzugt aus Aluminium und bevorzugt einstückig gefertigt. Die Verbindung des Verbinders 7, 10, 24 mit den Rahmenelementen 2 kann ohne Vertiefungen oder sonstige Rastelemente in oder an den Aufnahmenuten 4, 6, 14 erfolgen und ist bevorzugt eine lösbare Verbindung. Demnach können die Aufnahmenuten 4, 6, 14 frei von Vertiefungen oder sonstigen Rastelementen ausgebildet sein.

## Patentansprüche

1. Verbinder (7, 10, 24) zur Verbindung eines ersten Rahmenelements (3) mit einem zweiten Rahmenelement (5) mit einem ersten Schenkel (8, 12, 25) zum Einschieben in eine entsprechende Aufnahmenut (4) des ersten Rahmenelements (3) und mit einem zweiten Schenkel (9, 13, 26) zum Einschieben in eine entsprechende weitere Aufnahmenut (6) des zweiten Rahmenelements (5), **dadurch gekennzeichnet, dass** zumindest der erste Schenkel (8, 12, 25) zumindest ein federnd gelagertes Druckstück (17) zum Verklemmen des ersten Schenkels (8, 12, 25) innerhalb der Aufnahmenut (4) des ersten Rahmenelements (3) aufweist, wobei ein Verbindungselement (27) mit einer im Wesentlichen senkrecht zum ersten Schenkel (8, 12, 25) verlaufenden ersten Anlagefläche (28) zur Stoßverbindung mit einer geraden Stirnseite (30a) des ersten Rahmenelements (3) vorgesehen ist, wobei an der ersten Anlagefläche (28) des Verbindungselements (27) ein Versteifungselement (31) zum Einschieben in eine entsprechende Nut des ersten Rahmenelements (3) vorgesehen ist.

2. Verbinder (7, 10, 24) nach Anspruch 1, **dadurch gekennzeichnet, dass** das Druckstück (17), insbesondere eine Kugel (K), verschiebbar geführt in einer Hülse (19) aufgenommen ist und über ein Federelement (20) in der Hülse (19), insbesondere eine Schraubenfeder (20a), in Richtung einer Position, in welcher das Druckstück (17) aus einem eine Austrittsöffnung (21) aufweisenden Ende (22) der Hülse (19) herausragt, vorgespannt ist.

3. Verbinder (7, 10, 24) nach Anspruch 1 oder 2, **dadurch gekennzeichnet, dass** der erste Schenkel (8, 12, 25) zwei in Längsrichtung (LR) des ersten Schenkels (8, 12, 25) voneinander beabstandete Druckstücke (17) aufweist.

4. Verbinder (7, 10, 24) nach einem der Ansprüche 1 bis 3, **dadurch gekennzeichnet, dass** der zweite Schenkel (9, 13, 26) zumindest ein weiteres Druckstück (17) zum Verklemmen des zweiten Schenkels (9, 13, 26) innerhalb der weiteren Aufnahmenut (6) des zweiten Rahmenelements (5) aufweist, wobei der zweite Schenkel (9, 13, 26) bevorzugt zwei in Längsrichtung (LR2) des zweiten Schenkels (9, 13, 26) voneinander beabstandete Druckstücke (17) aufweist.

5. Verbinder (7, 10, 24) nach einem der Ansprüche 1 bis 4, **dadurch gekennzeichnet, dass** der erste Schenkel (8, 12, 25) und der zweite Schenkel (9, 13, 26) in einem Winkel (α) von vorzugsweise im Wesentlichen 90 Grad zueinander angeordnet sind.

6. Verbinder (7, 10, 24) nach einem der Ansprüche 1 bis 5, **dadurch gekennzeichnet, dass** eine Mehrzahl von ersten Schenkeln (25) an der ersten Anlagefläche (28) des Verbindungselements (27), beispielsweise Eckverbindungselements (27a), angeordnet sind.

7. Verbinder (7, 10, 24) nach einem der Ansprüche 1 bis 6, **dadurch gekennzeichnet, dass** das Verbindungselement (27), insbesondere Eckverbindungselement (27a), eine im Wesentlichen senkrecht zum zweiten Schenkel (9, 13, 26) verlaufende zweite Anlagefläche (29) zur Stoßverbindung mit einer geraden Stirnseite (30b) des zweiten Rahmenelements (5) aufweist.

8. Verbinder (7, 10, 24) nach Anspruch 7, **dadurch gekennzeichnet, dass** eine Mehrzahl von zweiten Schenkeln (9, 13, 26) an der zweiten Anlagefläche (29) des Verbindungselements (27), beispielsweise Eckverbindungselements (27a), angeordnet sind.

9. Rahmen (1), insbesondere LED-Leuchtbox-Rahmen, aufweisend:
- ein erstes Rahmenelement (3) mit einer Aufnahmenut (4),
- ein zweites Rahmenelement (5) mit einer weiteren Aufnahmenut (6),
- einen Verbinder (7, 10, 24) nach einem der Ansprüche 1 bis 8, wobei der erste Schenkel (8, 12, 25) in die Aufnahmenut (4) des ersten Rahmenelements (3) eingeschoben ist und der zweite Schenkel (9, 13, 26) in die weitere Aufnahmenut (6) des zweiten Rahmenelements (5) eingeschoben ist.

10. Rahmen (1) nach Anspruch 9, **dadurch gekennzeichnet, dass** das Druckstück (17), insbesondere eine Kugel (K), verschiebbar geführt in einer Hülse (19) aufgenommen ist und über ein Federelement (2) in der Hülse (19), insbesondere eine Schraubenfeder (20a), in Richtung einer Position, in welcher das Druckstück (17) aus einem eine Austrittsöffnung (21) aufweisenden Ende (22) der Hülse (19) herausragt, vorgespannt ist.

11. Rahmen (1) nach Anspruch 10, **dadurch gekennzeichnet, dass** eine Stirnseite (23) am die Austrittsöffnung (21) aufweisenden Ende (22) der Hülse (19) bündig mit den angrenzenden Abschnitten des ersten Schenkels (8, 12, 25) angeordnet ist.

12. Werbemodul, insbesondere Leuchtkasten, mit einem Rahmen (1) nach einem der Ansprüche 9 bis 11 und mit einem Werbeträger, welcher in einem gespannten Zustand mit dem Rahmen (1) verbunden ist.

## Claims

1. Connector (7, 10, 24) for connecting a first frame element (3) to a second frame element (5), comprising a first leg (8, 12, 25) for insertion into a corresponding receiving groove (4) of the first frame element (3) and comprising a second leg (9, 13, 26) for insertion into a corresponding further receiving groove (6) of the second frame element (5), **characterized in that** at least the first leg (8, 12, 25) has at least one resiliently mounted pressure piece (17) for clamping the first leg (8, 12, 25) within the receiving groove (4) of the first frame element (3), a connecting element (27), which has a first contact surface (28) that extends substantially perpendicularly to the first leg (8, 12, 25), being provided for butt connection to a straight end face (30a) of the first frame element (3), a stiffening element (31) for insertion into a corresponding groove of the first frame element (3) being provided on the first contact surface (28) of the connecting element (27).

2. Connector (7, 10, 24) according to claim 1, **characterized in that** the pressure piece (17), in particular a ball (K), is accommodated in a displaceably guided manner in a sleeve (19) and is preloaded by a spring element (20) in the sleeve (19), in particular a helical spring (20a), toward a position in which the pressure piece (17) projects from an end (22) of the sleeve (19), which end has an outlet opening (21).

3. Connector (7, 10, 24) according to either claim 1 or claim 2,
**characterized in that** the first leg (8, 12, 25) has two pressure pieces (17) spaced apart from one another in the longitudinal direction (LR) of the first leg (8, 12, 25).

4. Connector (7, 10, 24) according to any of claims 1 to 3,
**characterized in that** the second leg (9, 13, 26) has at least one further pressure piece (17) for clamping the second leg (9, 13, 26) within the further receiving groove (6) of the second frame element (5), the second leg (9, 13, 26) preferably having two pressure pieces (17) spaced apart from one another in the longitudinal direction (LR2) of the second leg (9, 13, 26).

5. Connector (7, 10, 24) according to any of claims 1 to 4,
**characterized in that** the first leg (8, 12, 25) and the second leg (9, 13, 26) are arranged at an angle (α) of preferably substantially 90 degrees to one another.

6. Connector (7, 10, 24) according to any of claims 1 to 5,
**characterized in that** a plurality of first legs (25) are arranged on the first contact surface (28) of the connecting element (27), for example corner connecting element (27a).

7. Connector (7, 10, 24) according to any of claims 1 to 6,
**characterized in that** the connecting element (27), in particular corner connecting element (27a), has a second contact surface (29), which extends substantially perpendicularly to the second leg (9, 13, 26), for butt connection to a straight end face (30b) of the second frame element (5).

8. Connector (7, 10, 24) according to claim 7, **characterized in that** a plurality of second legs (9, 13, 26) are arranged on the second contact surface (29) of the connecting element (27), for example corner connecting element (27a).

9. Frame (1), in particular an LED lightbox frame, comprising:
- a first frame element (3) having a receiving groove (4),
- a second frame element (5) having a further receiving groove (6),
- a connector (7, 10, 24) according to any of claims 1 to 8, wherein the first leg (8, 12, 25) is inserted into the receiving groove (4) of the first frame element (3) and the second leg (9, 13, 26) is inserted into the further receiving groove (6) of the second frame element (5).

10. Frame (1) according to claim 9, **characterized in that** the pressure piece (17), in particular a ball (K), is accommodated in a displaceably guided manner in a sleeve (19) and is preloaded by a spring element (2) in the sleeve (19), in particular a helical spring (20a), toward a position in which the pressure piece (17) projects from an end (22) of the sleeve (19), which end has an outlet opening (21).

11. Frame (1) according to claim 10, **characterized in that** an end face (23) of the end (22) of the sleeve (19), which end has the outlet opening (21), is arranged flush with the adjacent portions of the first leg (8, 12, 25).

12. Advertising module, in particular a lightbox, comprising a frame (1) according to any of claims 9 to 11 and comprising an advertising medium which is connected to the frame (1) in a tensioned state.

## Revendications

1. Organe de liaison (7, 10, 24) pour la liaison d'un premier élément de cadre (3) avec un deuxième élément de cadre (5) avec une première branche (8, 12, 25) pour l'insertion dans une rainure de réception correspondante (4) du premier élément de cadre (3) et avec une deuxième branche (9, 13, 26) pour l'insertion dans une autre rainure de réception correspondante (6) du deuxième élément de cadre (5), **caractérisé en ce qu'**au moins la première branche (8, 12, 25) comporte au moins une pièce de pression montée à ressort (17) pour le serrage de la première branche (8, 12, 25) à l'intérieur de la rainure de réception (4) du premier élément de cadre (3), où un élément de liaison (27) avec une première surface de contact (28) s'étendant sensiblement perpendiculairement à la première branche (8, 12, 25) pour la liaison bout à bout avec un côté frontal rectiligne (30a) du premier élément de cadre (3) est prévu, où un élément raidisseur (31) pour l'insertion dans une rainure correspondante du premier élément de cadre (3) est prévu sur la première surface de contact (28) de l'élément de liaison (27).

2. Organe de liaison (7, 10, 24) selon la revendication 1, **caractérisé en ce que** la pièce de pression (17), en particulier une bille (K), est reçue en étant guidée de manière coulissante dans un manchon (19) et est précontrainte par l'intermédiaire d'un élément à ressort (20) dans le manchon (19), en particulier un ressort hélicoïdal (20a), dans la direction d'une position dans laquelle la pièce de pression (17) dépasse d'une extrémité (22) du manchon (19) présentant une ouverture de sortie (21).

3. Organe de liaison (7, 10, 24) selon la revendication 1 ou 2, **caractérisé en ce que** la première branche (8, 12, 25) comporte deux pièces de pression (17) distantes l'une de l'autre dans la direction longitudinale (LR) de la première branche (8, 12, 25).

4. Organe de liaison (7, 10, 24) selon l'une des revendications 1 à 3, **caractérisé en ce que** la deuxième branche (9, 13, 26) comporte au moins une autre pièce de pression (17) pour le serrage de la deuxième branche (9, 13, 26) à l'intérieur de l'autre rainure de réception (6) du deuxième élément de cadre (5), où la deuxième branche (9, 13, 26) comporte de préférence deux pièces de pression (17) distantes l'une de l'autre dans la direction longitudinale (LR2) de la deuxième branche (9, 13, 26).

5. Organe de liaison (7, 10, 24) selon l'une des revendications 1 à 4, **caractérisé en ce que** la première branche (8, 12, 25) et la deuxième branche (9, 13, 26) sont agencées sous un angle (α) de préférence de sensiblement 90 degrés l'une par rapport à l'autre.

6. Organe de liaison (7, 10, 24) selon l'une des revendications 1 à 5, **caractérisé en ce qu'**une pluralité de premières branches (25) sont agencées sur la première surface de contact (28) de l'élément de liaison (27), par exemple de l'élément de liaison d'angle (27a).

7. Organe de liaison (7, 10, 24) selon l'une des revendications 1 à 6, **caractérisé en ce que** l'élément de liaison (27), en particulier l'élément de liaison d'angle (27a), comporte une deuxième surface de contact (29) s'étendant sensiblement perpendiculairement à la deuxième branche (9, 13, 26) pour la liaison bout à bout avec un côté frontal rectiligne (30b) du deuxième élément de cadre (5).

8. Organe de liaison (7, 10, 24) selon la revendication 7, **caractérisé en ce qu'**une pluralité de deuxièmes branches (9, 13, 26) sont agencées au niveau de la deuxième surface de contact (29) de l'élément de liaison (27), par exemple de l'élément de liaison d'angle (27a).

9. Cadre (1), en particulier cadre de caisson lumineux à LED, comportant:
- un premier élément de cadre (3) avec une rainure de réception (4),
- un deuxième élément de cadre (5) avec une autre rainure de réception (6),
- un organe de liaison (7, 10, 24) selon l'une des revendications 1 à 8, où la première branche (8, 12, 25) est insérée dans la rainure de réception (4) du premier élément de cadre (3) et la deuxième branche (9, 13, 26) est insérée dans l'autre rainure de réception (6) du deuxième élément de cadre (5).

10. Cadre (1) selon la revendication 9, **caractérisé en ce que** la pièce de pression (17), en particulier une bille (K), est reçue en étant guidée de manière coulissante dans un manchon (19) et est précontrainte par l'intermédiaire d'un élément à ressort (2) dans le manchon (19), en particulier un ressort hélicoïdal (20a), dans la direction d'une position dans laquelle la pièce de pression (17) dépasse d'une extrémité (22) du manchon (19) présentant une ouverture de sortie (21).

11. Cadre (1) selon la revendication 10, **caractérisé en ce qu'**un côté frontal (23) est agencé à l'extrémité (22) du manchon (19) présentant l'ouverture de sortie (21) affleurant avec les sections voisines de la première branche (8, 12, 25).

12. Module publicitaire, en particulier caisson lumineux, avec un cadre (1) selon l'une des revendications 9 à 11 et avec un support publicitaire, qui est relié au cadre (1) dans un état tendu.
